# FASCICULE DE BREVET EUROPEEN

(11) **EP 1 987 992 B1**
(45) Date de publication et mention de la délivrance du brevet: **23.02.2011**
(21) Numéro de dépôt: 07290561.5
(22) Date de dépôt: 04.05.2007
(51) Int. Cl.: B60R 22/24

(54) **Dispositif pour guider la sangle d'une ceinture de sécurité**
Vorrichtung zum Führen des Riemens eines Sicherheitsgurts
Device for guiding the strap of a seatbelt

(43) Date de publication de la demande: 05.11.2008
(73) Titulaire: Lisi Automotive Rapid, 95650 Puiseux Pontoise (FR)
(72) Inventeur: Marcel, Gilles, 95620 Parmain (FR); Viennois, Fabien, 92800 Puteaux (FR); Nguyen, Benjamin, 77640 Jouarre (FR)
(74) Mandataire: Beaudouin-Lafon, Emmanuel

(56) Documents cités:
- DE-A1- 2 545 890
- JP-A- 57 191 145
- US-A- 4 799 737
- US-A- 5 372 382

## Description

La présente invention concerne un dispositif pour guider la sangle d'une ceinture de sécurité à trois points le long d'une partie concave de la carrosserie d'un véhicule automobile, ainsi qu'un véhicule automobile avec une telle ceinture de sécurité et un tel dispositif.

Les ceintures de sécurité habituellement utilisées dans les véhicules automobiles sont conçues pour retenir un passager à partir de trois points de montage, deux de ces points, les points de montage inférieurs, étant situés de part et d'autre de l'assise du siège auquel la ceinture de sécurité est attribuée et le troisième point, le point de montage supérieur, étant situé en hauteur, sur la carrosserie, par exemple sur la doublure de pied de milieu d'une voiture à quatre portes. Ce troisième point de montage est disposé généralement à hauteur de la tête d'un passager normalisé et constitue le point de départ de la partie de la sangle de la ceinture de sécurité qui est destinée à retenir la poitrine du passager.

Lorsque le pied de milieu, ou un montant correspondant dans une voiture à deux portes, et sa doublure ont une forme au moins approximativement droite, la partie montante de la sangle, qui s'étend du point inférieur de montage au point supérieur de montage, suit assez bien la forme de ceux-ci et ne risque pas de gêner l'occupant du siège auquel la ceinture de sécurité est attribuée. Si toutefois ces éléments ont une forme courbe, puisque l'habitacle du véhicule automobile est plus large à hauteur des épaules des passagers qu'au plancher et au plafond, la partie montante de la sangle ne suit plus la forme de ces éléments, mais suit une trajectoire sécante.

Le but de l'invention est de proposer une solution qui permette à une sangle d'une ceinture de sécurité de suivre une forme courbe d'un élément de carrosserie sur lequel elle est montée. La solution doit être facile à mettre en oeuvre, notamment en chaîne automatique de montage.

Un dispositif d'ajustement pour une ceinture de sécurité est connu du document US-A-4 799 737.

Le but de l'invention est atteint avec un dispositif pour guider une ceinture de sécurité le long d'une partie concave de la carrosserie d'un véhicule automobile selon la revendication 1.

La solution de l'invention consiste donc principalement, mais non exclusivement, en une pièce ayant la forme d'une boucle ou, abstraction faite de sa forme allongée et non circulaire, d'un arceau replié sur lui-même et conformée pour être fixée sur la partie concave de la carrosserie.

Cet arceau est destiné à être enfilé sur la partie montante de la sangle destinée à s'étendre entre un point inférieur de montage et un point supérieur de montage de la ceinture de sécurité et est en outre destiné à être fixé en une position intermédiaire entre les deux points de montage, cette position intermédiaire étant à déterminer selon la forme courbe de la partie concave de carrosserie de manière à maintenir la sangle le plus proche de cet élément de carrosserie. Cette position intermédiaire correspond généralement à un point de rebroussement de la courbe décrivant la forme de la partie concave de la carrosserie.

Selon un premier mode de réalisation de l'invention, l'attache est réalisée en matière plastique sous la forme d'une boucle presque entièrement fermée destinée à être enfilée sur la sangle de la ceinture de sécurité lors de la fabrication de cette dernière. Le fabricant de véhicules automobiles dans lesquels des ceintures de sécurité ainsi équipées doivent être montées, reçoit les ceintures de sécurité pré-équipées de l'attache selon l'invention.

Selon un autre mode de réalisation de l'invention, le dispositif de l'invention consiste principalement en une attache ayant sensiblement la forme d'une boucle ouverte, allongée ou non. Grâce à la présence d'une fente ou ouverture dans le pourtour de la boucle, la sangle de la ceinture de sécurité peut être introduite dans la boucle après la fabrication de la ceinture de sécurité et même lorsque la ceinture de sécurité est déjà montée dans un véhicule. Cette disposition permet de remplacer l'attache si elle s'est cassée, par exemple, lors d'un accident du véhicule.

Indépendamment du mode de réalisation de l'invention, le dispositif de l'invention peut comprendre en outre l'une au moins des caractéristiques ci-après, considérées isolément et selon toutes combinaisons techniquement possibles :
- les moyens de fixation séparables comprennent des premiers éléments disposés sur l'attache et des seconds éléments disposés sur la partie de la carrosserie ;
- l'attache est pourvue, dans sa circonférence, d'une ouverture permettant d'introduire la ceinture de sécurité dans l'attache ;
- les moyens de fixation séparables comportent des premiers éléments formés en saillie sur l'attache et conformés pour pouvoir être engagés dans des évidements formés comme seconds éléments des moyens de fixation dans la partie de la carrosserie ;
- le dispositif comprend des moyens conformés pour pouvoir exercer une contrainte relative entre l'attache et la partie de la carrosserie afin de stabiliser l'attache lorsque celle-ci est immobilisée sur la partie de la carrosserie ;
- l'attache est pourvue de languettes formant une partie du pourtour de l'attache et définissant entre elles l'ouverture permettant d'introduire la sangle de la ceinture de sécurité dans l'attache ;
- les premiers éléments des moyens de fixation séparables comprennent deux corps en saillie ayant sensiblement la forme de champignons et les seconds éléments des moyens de fixation séparables comprennent deux évidements conformés pour pouvoir recevoir et verrouiller les premiers éléments.
   Le but de l'invention est également atteint avec un véhicule automobile équipé d'une ceinture de sécurité à trois points et un dispositif de l'invention.
   D'autres caractéristiques et avantages de la présente invention ressortiront de la description ci-après d'un mode de réalisation de l'invention, la description étant faite en référence aux dessins annexés.
   Dans ces dessins,
- la figure 1 représente les trajets respectifs d'une sangle d'une ceinture de sécurité montée sur un montant courbe d'une carrosserie avec et sans un dispositif selon l'invention,
- les figures 2 et 3 représentent, sous deux angles de vue complémentaires, une attache du dispositif de l'invention,
- la figure 4 représente une partie de la carrosserie d'un véhicule automobile préparée pour recevoir l'attache des figures 1 et 2,
- la figure 5 représente la partie de la carrosserie de la figure 4 et l'attache des figures 2 et 3 engagée dans la partie de la carrosserie.

Le dispositif de l'invention est destiné à guider une ceinture de sécurité le long d'une partie concave 2 de la carrosserie d'un véhicule automobile. La ceinture de sécurité est fixée en trois points, à savoir en un premier et un second points inférieurs F1, F2 situés de part et d'autre d'un siège auquel la ceinture est attribuée, et en un point supérieur F3.

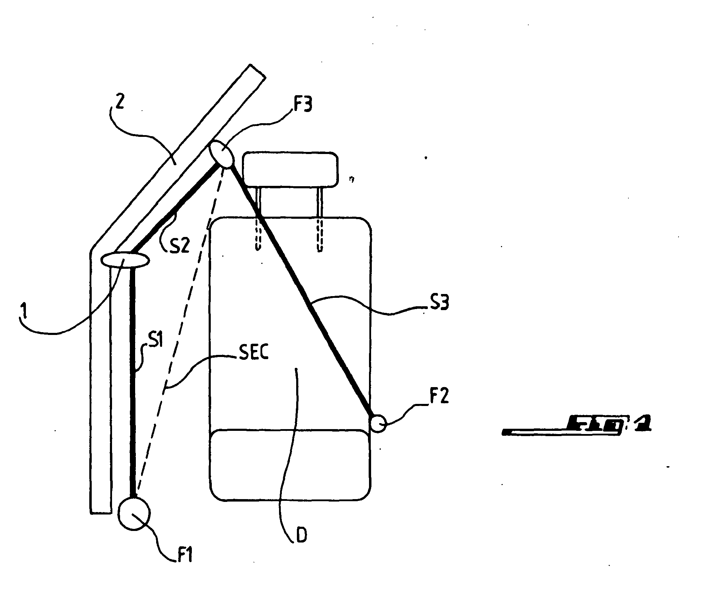

La figure 1 représente en une vue simplifiée l'emplacement d'un dispositif selon l'invention sur une partie courbe, notamment sur une partie concave, de la carrosserie d'un véhicule automobile, ainsi que l'effet obtenu avec ce dispositif.

Lorsque l'habitacle d'un véhicule automobile a une forme latéralement bombée, le pied de milieu dans une voiture à quatre portes, ou un montant correspondant dans une voiture à deux portes, est un élément concave, puisque la carrosserie est plus large au niveau des épaules des passagers qu'au plancher et au plafond du véhicule.

Lorsque l'on monte une ceinture de sécurité à trois points de fixation sur un tel élément concave, la ceinture de sécurité suit, entre le premier point inférieur de fixation F1 et le point de fixation supérieur F3, un trajet rectiligne SEC correspondant à la sécante de la courbe que l'élément présente entre ces deux points de fixation. Un tel trajet étant susceptible de gêner l'occupant du siège D, un remède a été trouvé par l'invention : le dispositif décrit ci-après, qui est fixé sur la partie concave 2 de la carrosserie et qui donne à la partie montante de la sangle de la ceinture de sécurité un trajet en deux parties S1, S2.

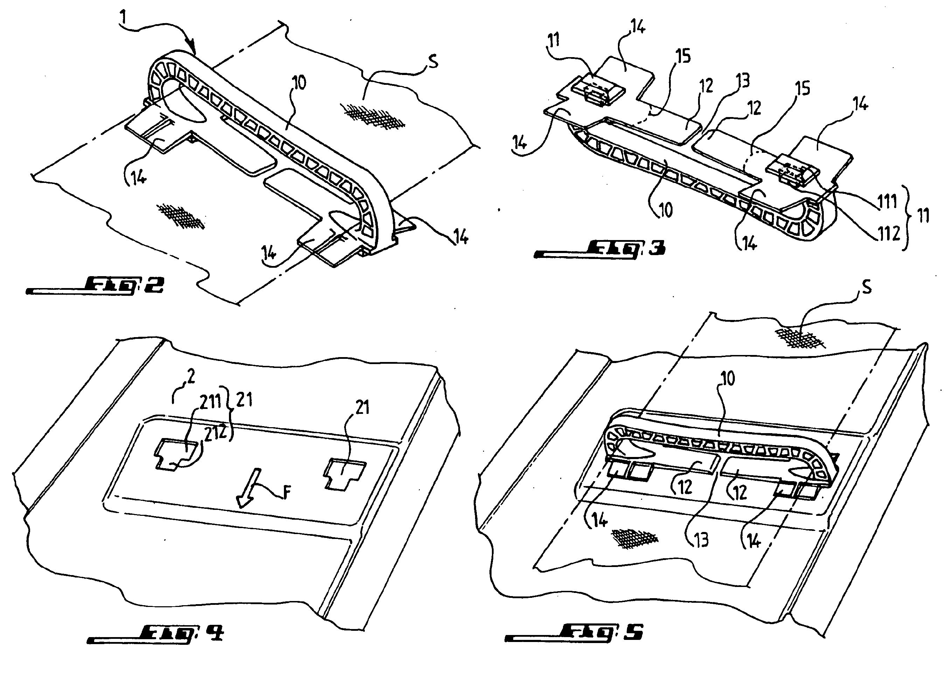

Le dispositif selon l'invention comprend une attache 1 représentée en détails sur les figures 2 et 3 et des moyens de fixation séparables dont des premiers éléments 11 sont représentés sur la figure 3 et dont des seconds éléments 21 sont représentés sur la figure 4.

L'attache 1, qui est avantageusement réalisée en matière synthétique par injection, comprend un corps 10 ayant sensiblement la forme d'une boucle ouverte ou d'un arceau dont les extrémités sont repliées l'une vers l'autre. Les extrémités repliées sont prolongées par des languettes 12 tendant l'une vers l'autre mais laissant entre leurs extrémités libres une ouverture 13 grâce à laquelle l'attache 1 peut être enfilée sur la sangle de la ceinture de sécurité S.

Les languettes 12 peuvent être de grande longueur laissant subsister entre elles une petite ouverture qui est suffisante pour enfiler l'attache 1 sur la sangle de la ceinture de sécurité S et assure en même temps que l'attache ne soit pas perdue entre le moment de la fabrication de la ceinture et le montage de celle-ci dans un véhicule automobile.

Toutefois, sans sortir du principe de la présente invention, les languettes 12 peuvent aussi être de faible longueur laissant subsister entre elles une grande ouverture 13.

L'attache 1 est par ailleurs conformée pour être immobilisé sur la partie 2 de la carrosserie d'un véhicule automobile, par exemple sur la doublure d'un pied milieu de la carrosserie.

Afin de pouvoir fixer l'attache 1 de manière amovible sur la partie 2 de la carrosserie, le dispositif de l'invention est pourvu de moyens de fixation séparables qui comprennent d'une part des premiers éléments 11 formés en saillie sur l'attache 1 et d'autre part des seconds éléments 21 formés par poinçonnage dans la partie 2 de la carrosserie. Selon le mode de réalisation représenté sur les dessins, les premiers éléments 11 ont une forme rappelant celle d'un champignon, mais avec une tête 111 et un corps 112 rectangulaires. De manière complémentaire, car ils doivent coopérer avec les premiers éléments 11, les seconds éléments 21 sont constitués par des ouvertures en forme de T, la largeur de la tête 211 du T correspondant à la largeur de la tête 111 de l'élément 11 qui doit y être introduit et la largeur du corps 212 du T correspondant à la largeur du corps 112 de l'élément 11. La distance entre les premiers éléments 11 est accordée à celle entre les seconds éléments 21, afin que l'attache 1 puisse être immobilisée sur la partie 2 de la carrosserie par insertion et verrouillage des premiers éléments 11 dans les seconds éléments 21.

Grâce à cette disposition, lorsqu'il s'agit d'immobiliser l'attache 1 sur la partie 2 de la carrosserie, l'attache 1 est présentée avec ses premiers éléments 11 devant les parties larges 211 des deux poinçonnages 21 en T, ensuite les têtes 111 des éléments 11 sont introduites dans les poinçonnages et puis l'attache 1 est mue dans le sens de la flèche F indiquée sur la figure 3 afin que les corps 112 des premiers éléments 11 puissent s'engager dans la partie moins large 212 des poinçonnages 21 et y être verrouillés de cette manière.

Afin que l'attache 1 puisse être maintenue dans cette position verrouillée, il est pourvu de moyens 14 précontraints réalisés sous la forme de deux ailes s'étendant de part et d'autre de chacun des premiers éléments 11 et formant ensemble un angle obtus très grand ouvert vers la tête 111.

La hauteur des premiers éléments 11, et plus précisément la distance entre le corps 10 de l'attache 1 et la tête 111 de chacun des premiers éléments 11, d'une part, et l'angle d'ouverture des ailes des moyens précontraints 14 d'autre part, sont déterminés de manière telle que, lorsque l'attache 1 est présentée devant les poinçonnages 21, il faut appuyer sur l'attache 1 pour faire entrer les premiers éléments 11 dans les poinçonnages 21 et surmonter ainsi la précontrainte engendrée par les ailes des moyens précontraints 14, avant de mouvoir l'attache 1 dans le sens de la flèche F.

En ce qui concerne l'envergure de la précontrainte que les moyens 14 doivent exercer sur les moyens de fixation 11, 21, lorsque l'attache 1 est verrouillée sur la partie 2 de la carrosserie, la rigidité du matériau utilisé pour la réalisation de l'attache 1, en combinaison avec un angle d'ouverture des moyens 14 de l'ordre de 160° sera généralement suffisante pour maintenir l'attache 1 dans une position stable lorsqu'il s'agit de guider la sangle de la ceinture de sécurité S le long de la carrosserie 2.

Pour enlever l'attache 1 de la partie 2 de la carrosserie, il suffit de déplacer l'attache 1 dans le sens inverse par rapport à la flèche F et puis de tirer sur l'attache 1 afin de faire sortir les moyens de fixation 11 des poinçonnages 21.

En ce qui concerne la disposition des poinçonnages 21 sur la partie 2 de la carrosserie d'un véhicule automobile, la distance verticale entre l'emplacement des poinçonnages 21 et le point de montage supérieur de la ceinture de sécurité sera à déterminer pour chaque type de véhicule en fonction de données géométriques de la carrosserie et de la position du siège, auquel la ceinture de sécurité est attribué, par rapport à la partie 2 de la carrosserie.

## Revendications

1. Dispositif pour guider une ceinture de sécurité (S) le long d'une partie concave (2) de la carrosserie d'un véhicule automobile, le dispositif comprenant une attache (1) ayant sensiblement la forme d'une boucle conformée pour pouvoir coulisser sur la ceinture de sécurité (S) et pour pouvoir être immobilisée sur la partie concave (2) de la carrosserie à l'aide de moyens de fixation séparables (11, 21), **caractérisé en ce que** les moyens de fixation séparables (11, 21) comprennent des premiers éléments de fixation (11) disposés en saillie sur l'attache (1), chacun d'entre eux comportant une tête (111) et un corps (112) moins large que la tête (111) et des seconds éléments (21) de fixation disposés sur la partie concave (2) de la carrosserie, chacun d'entre eux étant constitué par une ouverture en forme de T, la largeur de la tête (211) du T correspondant à la largeur de la tête (111) du premier élément (11) correspondant et la largeur du corps (212) du T correspondant à la largeur du corps (112) du premier élément correspondant.

2. Dispositif selon la revendication 1, **caractérisé en ce qu'**il comprend des moyens (14) conformés pour pouvoir exercer une contrainte relative entre l'attache (1) et la partie concave (2) de la carrosserie afin de stabiliser l'attache (1) lorsque celle-ci est immobilisée sur la partie concave (2) de la carrosserie, les moyens de contrainte (14) comprenant deux ailes enfermant entre elles un angle d'ouverture obtus ouvert vers la tête (111) de chacun des premiers éléments de fixation (11).

3. Dispositif selon la revendication 2, **caractérisé en ce que** l'angle d'ouverture est de l'ordre de 160°.

4. Dispositif selon l'une quelconque des revendications 1 à 3, **caractérisé en ce que** l'attache (1) est pourvue, dans sa circonférence, d'une ouverture (13) permettant d'introduire la ceinture de sécurité (S) dans l'attache (1).

5. Dispositif selon la revendication 4, **caractérisé en ce que** l'attache (1) est pourvue de languettes longues (12) définissant une faible ouverture (13).

6. Dispositif selon la revendication 4, **caractérisé en ce que** l'attache (1) est pourvue de languettes courtes (12) définissant une grande ouverture (13).

7. Véhicule automobile avec une ceinture de sécurité à trois points de fixation, **caractérisé en ce qu'**il comprend un dispositif selon l'une quelconque des revendications 1 à 6.

## Claims

1. A device for guiding a safety belt (S) along a concave portion (2) of the body of a motor vehicle, the device comprising a tie (1) substantially having the shape of a loop conformed in order to be able to slide on the safety belt (S) and to be able to be immobilized on the concave portion (2) of the body by separable attachment means (11, 21), **characterized in that** the separable attachment means (11, 21) comprise first attachment members (11) positioned so as to protrude on the tie (1), each of them including a head (111) and a body (112) less wide than the head (111) and second attachment members (21) positioned on the concave portion (2) of the body, each of them being formed by a T-shaped aperture, the width of the head (211) of the T corresponding to the width of the head (111) of the first corresponding member (11) and the width of the body (212) of the T corresponding to the width of the body (112) of the first corresponding member.

2. The device according to claim 1, **characterized in that** it comprises means (14) conformed in order to be able to exert a relative stress between the tie (1) and the concave portion (2) of the body in order to stabilize the tie (1) when the latter is immobilized on the concave portion (2) of the body, the stressing means (14) comprising two wings enclosing between them an obtuse aperture angle open towards the head (111) of each of the first attachment members (11).

3. The device according to claim 2, **characterized in that** the aperture angle is of the order of 160°.

4. The device according to any of claims 1 to 3, **characterized in that** the tie (1) is provided in its circumference with an aperture (13) allowing the safety belt (S) to be introduced into the tie (1).

5. The device according to claim 4, **characterized in that** the tie (1) is provided with short tabs (12) defining a small aperture (13).

6. The device according to claim 4, **characterized in that** the tie (1) is provided with short tabs (12) defining a large aperture (13).

7. A motor vehicle with a safety belt with three attachment points, **characterized in that** it comprises a device according to any of claims 1 to 6.

## Patentansprüche

1. Vorrichtung zur Führung eines Sicherheitsgurts (S) entlang eines konkaven Teils (2) der Karosserie eines Kraftfahrzeugs, wobei die Vorrichtung eine Befestigung (1) umfasst, die im Wesentlichen die Form einer Schnalle aufweist, die dazu angepasst ist, um auf dem Sicherheitsgurt (S) gleiten zu können, und um auf dem konkaven Teil (2) der Karosserie mit Hilfe von trennbaren Befestigungsmitteln (11, 21) blockiert werden zu können, **dadurch gekennzeichnet, dass** die trennbaren Befestigungsmittel (11, 21) erste Befestigungselemente (11) umfassen, die vorspringend auf der Befestigung (1) angebracht sind, wobei jedes von ihnen einen Kopf (111) und einen Körper (112) umfasst, der weniger breit als der Kopf (111) ist, und zweite Befestigungselemente (21), die auf dem konkaven Teil (2) der Karosserie angebracht sind, wobei jedes von ihnen aus einer T-förmigen Öffnung besteht, wobei die Breite des Kopfes (211) des T der Breite des Kopfes (111) des ersten entsprechenden Elements (11) entspricht und die Breite des Körpers (212) des T der Breite des Körpers (112) des entsprechenden ersten Elements entspricht.

2. Vorrichtung nach Anspruch 1, **dadurch gekennzeichnet, dass** sie Mittel (14) umfasst, die dazu angepasst sind, um eine relative Spannung zwischen der Befestigung (1) und dem konkaven Teil (2) der Karosserie auszuüben, um die Befestigung (1) zu stabilisieren, wenn diese auf dem konkaven Teil (2) der Karosserie blockiert ist, wobei die Spannungsmittel (14) zwei Flügel umfassen, die zwischen sich einen stumpfen Öffnungswinkel einschließen, der gegen den Kopf (111) jedes der ersten Befestigungselemente (11) geöffnet ist.

3. Vorrichtung nach Anspruch 2, **dadurch gekennzeichnet, dass** der Öffnungswinkel im Bereich von 160° liegt.

4. Vorrichtung nach einem der Ansprüche 1 bis 3, **dadurch gekennzeichnet, dass** die Befestigung (1) auf ihrem Umfang mit einer Öffnung (13) versehen ist, die es ermöglicht, den Sicherheitsgurt (S) in die Befestigung (1) einzuführen.

5. Vorrichtung nach Anspruch 4, **dadurch gekennzeichnet, dass** die Befestigung (1) mit langen Laschen (12) versehen ist, die eine kleine Öffnung (13) definieren.

6. Vorrichtung nach Anspruch 4, **dadurch gekennzeichnet, dass** die Befestigung (1) mit kurzen Laschen (12) versehen ist, die eine große Öffnung (13) definieren.

7. Kraftfahrzeug mit einem Sicherheitsgurt mit drei Befestigungspunkten, **dadurch gekennzeichnet, dass** es eine Vorrichtung nach einem der Ansprüche 1 bis 6 umfasst.
